# EUROPEAN PATENT APPLICATION

(11) **EP 1 712 569 A1**
(43) Date of publication of application: **18.10.2006**
(21) Application number: 05703800.2
(22) Date of filing: 19.01.2005
(51) Int. Cl.: C08F 6/10, C08F 10/10, C08F 297/00

(54) **METHOD FOR PRODUCING ISOBUTYLENE RESIN POWDER**

(30) Priority: 29.01.2004 JP 2004020997
(71) Applicant: KANEKA CORPORATION, Osaka-shi, Osaka 530-8288 (JP)
(72) Inventor: YOSHIMI, Tomoyuki, Kako-gun, Hyogo 675-0163 (JP); OHARA, Koichiro, Nishinomiya-shi, Hyogo 663-8102 (JP); FURUKAWA, Naoki, Himeji-shi, Hyogo 670-0073 (JP)
(74) Representative: Vossius & Partner
(86) International application number: PCT/JP2005/000563
(87) International publication number: WO 2005/073259

(57) **Abstract**

It is an object of the present invention to provide a resin powder composed of an isobutylene polymer having low contents of a remaining solvent and a remaining monomer in a product. The present invention is accomplished by a method of removing a solvent while suspending the isobutylene polymer solution in water with a surfactant to obtain resin slurry, and subjecting the resin slurry to steam stripping at a temperature ranging from 150°C to less than 180°C to produce a resin powder without deterioration in quality, the resin powder having significantly low contents of the remaining solvent and remaining styrene in the resin.

## Description

### Technical Field

The present invention relates to a method for producing an isobutylene resin powder, the method including removing a remaining solvent and a remaining monomer from an isobutylene polymer-containing solution to produce a resin powder.

### Background Art

With respect to a process for producing an isobutylene polymer including a polymer block mainly containing an isobutylene unit and a polymer block mainly containing an aromatic vinyl monomer unit by cationic polymerization of isobutylene and an aromatic vinyl monomer such as styrene, for example, US. Pat. No. 4,946,899 (Patent Document 1) discloses a process for producing such an isobutylene polymer in a mixed solvent of methyl chloride and methylcyclohexane.

Japanese Examined Patent Application Publication No. 7-59601 (Patent Document 2) discloses a process for producing an isobutylene block copolymer including an isobutylene polymer block and a styrene polymer block in a mixed solvent of methylene chloride and hexane.

To recover a rubber polymer, in general, the following processes are often employed: a process in which after removing a solvent with a thin-film evaporator or an extruder, the resulting polymer is pelletized by underwater cutting system, or the resulting polymer is subjected to steam stripping into a powder.

With respect to a process for removing a solvent from a polymer solution of a thermoplastic polymer in the solvent, for example, Japanese Unexamined Patent Application Publication No. 8-041123 (Patent Document 3) proposes a process of reducing the remaining solvent content in a styrene-acrylic copolymer to 1,000 ppm or less without the thermal and mechanical degradation of the resulting resin with a single-screw thin-film evaporator. However, if this process is applied to an isobutylene block copolymer used in the present invention, coloring and the like due to the thermal and mechanical degradation of the resin disadvantageously occur because the solvent evaporates in a molten state of the resin.

Japanese Unexamined Patent Application Publication No. 2002-161109 (Patent Document 4) proposes a process of removing a solvent from an isobutylene block copolymer by evaporation with a twin-screw extruder. The process can provide pellets. However, the process is not always advantageous to achieve a remaining solvent content of 1,000 ppm or less and a remaining monomer content of 1 ppm or less in final dry resin product pellets because expensive facility is required.

With respect to the removal of the remaining solvent and the remaining monomer by steam stripping, in the case of where a hydrogenated elastomer is taken as an example, the following Patent Documents show adverse effects on products: Japanese Unexamined Patent Application Publication No. 1-056712 (Patent Document 5) shows an increase in particle size at 110°C or higher; and Japanese Unexamined Patent Application Publication No. 8-301929 (Patent Document 6) shows that temperatures exceeding 150°C cause coloring and a deterioration in physical properties.

To use an isobutylene polymer for food packaging applications and medical applications, in any production process described above, the remaining solvent and the remaining monomer must be removed after a powdering step, in particular, in a drying step. Particularly, in pelletization, a dryer must be installed upstream from an extruder. Furthermore, recovery systems of recovering a solvent and a monomer are required. In particular, with respect to the removal of a styrene monomer, such a process is disadvantageous because the treatment rate with a vent extruder is restricted to the styrene monomers removal rate rather than evaporation of water because of the high boiling point of styrene monomer and thus expensive equipment is required.

It is desired to overcome the problems in producing a resin powder from an isobutylene polymer and to develop a process of stably producing a product having low contents of a remaining solvent and a remaining monomer.

(Patent Document 1) U.S. Pat. No. 4,946,899

(Patent Document 2) Japanese Examined Patent Application Publication No. 7-59601

(Patent Document 3) Japanese Unexamined Patent Application Publication No. 8-041123

(Patent Document 4) Japanese Unexamined Patent Application Publication No. 2002-161109

(Patent Document 5) Japanese Unexamined Patent Application Publication No. 1-056712

(Patent Document 6) Japanese Unexamined Patent Application Publication No. 8-301929

### Disclosure of Invention

### Problems to be Solved by the Invention

In consideration of the above-described situation, it is an object of the present invention to provide a method for stably producing a resin powder composed of an isobutylene polymer having significantly low contents of a remaining solvent and a remaining monomer.

### Means for Solving the Problems

The present invention relates to a method for producing a resin powder by removing a solvent from a solution containing an isobutylene polymer, the method including the steps of (1) adding a surfactant and water to the solution, stirring the mixture to form a liquid-liquid dispersion, removing a solvent by heating while stirring the mixture to cause liquid-liquid dispersion; and then (2) removing a remaining solvent and a remaining monomer by steam stripping to form a resin powder, wherein the steam stripping is performed at a temperature ranging from 150°C to less than 180°C.

According to a preferred embodiment of the method for producing the isobutylene resin powder, the surfactant used in the step (1) is a nonionic surfactant having a cloud point equal to or higher than the azeotropic point of a mixture of the solvent and water.

According to another preferred embodiment of the method for producing the isobutylene resin powder, the temperature at which the solvent is removed in the step (1) is from 70°C to less than 130°C.

According to another preferred embodiment of the method for producing the isobutylene resin powder, the method further includes a step of (3) separating the resin powder by filtration, centrifugation, or sedimentation from an aqueous resin-powder-containing solution produced in the step (2) and then drying the resulting resin powder, wherein the resin powder is dried with an extruder having a volatile materials evaporating systems into pellets.

According to another preferred embodiment of the method for producing the isobutylene resin powder, the isobutylene polymer is a block copolymer including (A) a polymer block mainly containing an isobutylene unit; and (B) a polymer block mainly containing an aromatic vinyl monomer unit.

According to another preferred embodiment of the method for producing the isobutylene resin powder, the solvent of the solution containing the isobutylene polymer is a mixed solvent of a primary monohalogenated hydrocarbon having 3 to 8 carbon atoms and/or a secondary monohalogenated hydrocarbon having 3 to 8 carbon atoms and an aliphatic hydrocarbon and/or an aromatic hydrocarbon.

### Advantages

According to the present invention, it is possible to produce a resin powder composed of an isobutylene polymer having low contents of a remaining solvent and a remaining monomer without deterioration in quality. Furthermore, the simplification of the subsequent steps of dehydrating and drying the resin powder to produce a product can be expected. In addition, recovery systems for collecting a solvent and a monomer are not necessary, thereby reducing the cost of equipment.

Furthermore, the main chain of the isobutylene polymer is not degraded, e.g. oxidized, even at 150°C or higher. Therefore, it is possible to provide a product having low contents of a remaining solvent and a remaining monomer, wherein known thermoplastic elastomers cannot achieve such low contents because of temperature restrictions.

### Brief Description of the Drawing

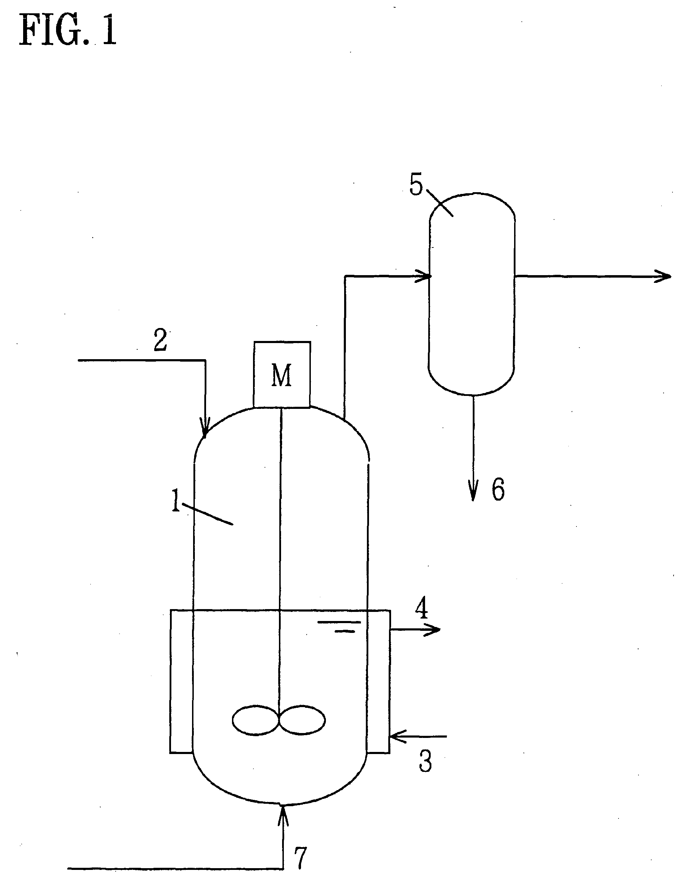

Fig. 1 is an illustration of a pressure-proof stirring apparatus for performing powdering and steam stripping according to the present invention.

### Reference Numerals

- 1: pressure-proof stirred tank
- 2: material-feeding line
- 3 and 4: lines for circulating hot water through jacket
- 5: condenser
- 6: solvent recovery line
- 7: steam injection line

### Best Mode for Carrying Out the Invention

An isobutylene polymer of the present invention is not limited as long as the isobutylene polymer is a polymer containing a polymer block mainly containing an isobutylene unit. The isobutylene polymer is preferably a polymer including a polymer block (A) mainly containing an isobutylene unit and a polymer block (B) mainly containing an aromatic vinyl monomer unit. Specifically, a polymer prepared by cationic polymerization of monomers, such as isobutylene and an aromatic vinyl monomer, with an initiator in the presence of a Lewis acid catalyst can be suitably used.

The polymer block (A) mainly containing the isobutylene unit is a polymer block usually containing 60 percent by weight or more and preferably 80 percent by weight or more of the isobutylene unit. The polymer block (B) mainly containing the aromatic vinyl monomer is a polymer block usually containing 60 percent by weight or more and preferably 80 percent by weight or more of the aromatic vinyl monomer unit.

Examples of the aromatic vinyl monomer include, but are not particularly limited to, styrene, o-methylstyrene, m-methylstyrene, p-methylstyrene, α-methylstyrene, and indene. These may be used alone or in combination. Among these, styrene, p-methylstyrene, α-methylstyrene, or a mixture thereof is particularly preferable in view of cost.

The Lewis acid catalyst in the present invention is not particularly limited as long as the Lewis acid catalyst can be used in cationic polymerization. Examples thereof include halogenated metals, such as TiCl₄, BCl₃, BF₃, AlCl₃, and SnCl₄. Among these, titanium tetrachloride (TiCl₄) is preferable.

Examples of a polymerization solvent for use in the cationic polymerization include, but are not particularly limited to, halogenated hydrocarbon solvents, nonhalogenated solvents, and mixtures thereof. A mixed solvent of a primary monohalogenated hydrocarbon having 3 to 8 carbon atoms and/or a secondary monohalogenated hydrocarbon having 3 to 8 carbon atoms and an aliphatic hydrocarbon and/or an aromatic hydrocarbon is preferable.

Examples of the primary monohalogenated hydrocarbon having 3 to 8 carbon atoms and the secondary monohalogenated hydrocarbon having 3 to 8 carbon atoms include, but are not particularly limited to, methyl chloride, methylene chloride, 1-chlorobutane, and chlorobenzene. Among these, 1-chlorobutane is suitable in view of a balance among the solubility of isobutylene polymer, ease of decomposition for elimination of hazardous properties, and cost.

Examples of the aliphatic hydrocarbon and the aromatic hydrocarbon include, but are not particularly limited to, pentane, hexane, heptane, octane, cyclohexane, methylcyclohexane, ethylcyclohexane, and toluene. At least one compound selected from the group consisting of methylcyclohexane, ethylcyclohexane, and toluene is particularly preferable.

The initiator used in cationic polymerization is preferably a compound represented by formula (I):

(CR¹R²X)ₙR³ (I)

(wherein X represents a halogen atom, an alkoxy group having 1 to 6 carbon atoms, or an acyloxy group having 1 to 6 carbon atoms; R¹ and R² are the same or different, they each represent a hydrogen atom or a monovalent hydrocarbon group having 1 to 6 carbon atoms, and R¹ and R² may be the same or different; R³ represents a multivalent aromatic hydrocarbon group or a multivalent aliphatic hydrocarbon group; and n is a natural number of 1 to 6).

Specific examples of the compound represented by formula (I) include 1,4-bis(α-chloro-isopropyl)benzene (C₆H₄(C(CH₃)₂Cl)₂). Note that 1,4-bis(α-chloroisopropyl)benzene is also referred to as dicumyl chloride.

An electron donor may be further contained in preparing the isobutylene polymer, according to need. Examples of the electron donor include pyridines, amines, amides, sulfoxides, esters, and metal compounds each having an oxygen atom bonded to a metal atom.

In practical polymerization, the components are mixed under cool conditions, for example, at a temperature ranging from -100°C to less than 0°C. The temperature is particularly preferably ranging from -80°C to -30°C in view of a balance between the energy cost and the stability of the polymerization.

The number-average molecular weight of the isobutylene polymer is not particularly limited but is preferably 30,000 to 500,000 and particularly preferably 50,000 to 400,000 in view of flowability, processability, physical properties, and the like.

After polymerization, a polymer solution containing the isobutylene polymer is brought into contact with water or an aqueous alkaline solution to deactivate the catalyst and terminate the reaction. Subsequently, the solution is washed with water to extract and remove the residual catalyst and metal ions, thereby resulting in a purified dope.

The temperatures in deactivation and water washing are not particularly limited but are each preferably in the range of a normal temperature to 100°C. The amounts of water used for deactivation and water washing are not particularly limited but are each preferably in the range of 1/10 to 10 in terms of the volume ratio of water to the polymer solution.

Subsequently, the resulting purified polymer solution is subjected to powdering step (1) described below. The powdering step (1) is also referred to as a "crumbing step". It is preferred that the resin content in the polymer solution be adjusted to 10 to 60 percent by weight, if necessary, by adding the solvent used in the polymerization, and then the powdering step (1) be performed. When the concentration of the dope is low, the concentration can be adjusted to a target concentration with a single evaporator or a plurality of evaporators. Examples of the evaporator include a flash evaporator, a thin-film evaporator, a stirred tank, and a wetted-wall evaporator. When the concentration of the polymer solution is high, the polymer solution can be diluted with the solvent to a target concentration.

A resin powder can be prepared by performing step (1) of adding a surfactant and water to the resulting purified polymer solution, which is the isobutylene polymer-containing solution obtained after polymerization is completed and then the catalyst is deactivated and removed; and removing the solvent by heating while stirring the mixture to cause liquid-liquid dispersion. The volume of water added is not particularly limited but is preferably 0.5 to 4 times the volume of the polymer solution from the standpoint of ease of the formation of the liquid-liquid dispersion and the like.

The surfactant usable is not particularly limited but is preferably a nonionic surfactant. As the surfactant, a nonionic surfactant having a cloud point equal to or higher than the azeotropic point of a mixture of the solvent and water is preferably used in order to stably maintain the liquid-liquid dispersion in which the polymer solution is dispersed in water at a high temperature of 70°C or higher. Specific examples of the nonionic surfactant include glycerin fatty acid esters, sorbitan esters, propylene glycol fatty acid esters, sucrose fatty acid esters, citric acid mono-, di-, or tri-stearic esters, pentaerythritol fatty acid esters, trimethylolpropane fatty acid esters, polyglycerin fatty acid esters, polyoxyethylene glycerin fatty acid esters, polyesters, polyoxyethylene sorbitan fatty acid esters, polyethylene glycol fatty acid esters, polypropylene glycol fatty acid esters, polyoxyethylene glycol fatty alcohol ethers, polyoxyethylene alkyl phenyl ethers, N,N-bis(2-hydroxyethylene) fatty amines, condensation products from fatty acids and diethanol compounds, block polymers containing polyoxyethylenes and polyoxypropylenes, polyethylene glycols, and polypropylene glycol. These compounds may be used alone or in combination. The amount of the surfactant added is not particularly limited but is preferably 0.05 to 5 parts by weight based on the polymer. At 0.05 parts by weight or less, the surfactant does not sufficiently exert its effect to form particles. At above 5 parts by weight, the resulting polymer has degraded physical properties, and excessive foaming occurs in the powdering step, which is not preferable.

In the present invention, by performing step (1) of dispersing the purified polymer solution in water in the presence of the surfactant to form the liquid-liquid dispersion and then removing the solvent by heating, a powder is successfully formed. A tank provided with a stirrer is suitably used to form the liquid-liquid dispersion under stirring and to remove the solvent. The shapes of blades of an impeller for stirring are not particularly limited, and any impeller may be used. Examples of the impeller include screw impellers, propeller impellers, anchor impellers, paddle impellers, angled paddle impellers, turbine impellers, and large gate impellers. The operations of forming the liquid-liquid dispersion and removing the solvent may be performed with the same stirred tank. Alternatively, after the operation of forming the liquid-liquid dispersion is performed to form the dispersion, the operation of removing the solvent may be performed. These operations may be performed with a plurality of stirred tanks.

The temperature of the dispersion in the step (1) is not particularly limited but is preferably at least the azeotropic point of the solvent. However, when the temperature is set at the azeotropic point of the solvent or less, the solvent can be easily removed by reducing the pressure in the tank. Specifically, the temperature is preferably from 70°C to less than 130°C and more preferably from 80°C to less than 110°C. Temperatures of 70°C or less reduce the removal rate of the solvent and thus are not preferable in view of production efficiency. At 130°C or more, the nonionic surfactant does not function; hence, the liquid-liquid dispersion cannot be stably formed.

Subsequently, the resulting aqueous solution containing the resin powder is subjected to step (2) of a steam stripping operation in which steam passes through the solution, thereby further removing the remaining solvent. A tank for use in steam stripping needs to have a line for introducing steam. A process of introducing steam into the stirred tank is suitably employed as in the operations of forming the suspension and removing the solvent. The steam stripping operation may be performed by passing stream in the same tank subsequent to the removal of the solvent. Alternatively, the steam stripping operation may be performed in another stripping tank subsequent to the removal of the solvent. Furthermore, steam stripping may be continuously performed by connecting at least one stirred tank. Moreover, steam stripping may also be performed using a plate system for bringing steam into contact with the resin slurry.

The temperature of the dispersion in the step (2) is preferably from 150°C to less than 180°C and more preferably from 150°C to less than 170°C in order to reduce the remaining solvent and the remaining monomer. Temperatures of below 150°C reduce the removal rates of the solvent and the remaining monomer and thus are not preferable in view of production efficiency. At 180°C or more, the resin particles may fuse with each other and may adhere to the inner wall of the tank. This is not preferable in view of properties of the product powder and production efficiency. Known thermoplastic elastomers each having a double bond in the main chain thereof, for example, styrene-butadienestyrene (SBS) elastomers, cannot be subjected to stripping at a temperature of 150°C or more. That is, temperatures of 150°C or more cause oxidative degradation of the elastomers because of the presence of the double bond in the main chain, thereby significantly degrading quality. Thus, stripping must be performed at a temperature of less than 150°C. Therefore, it is substantially difficult to achieve a remaining solvent content of 1,000 ppm or less and a remaining monomer content of 1 ppm or less in final dry resin product pellets. Furthermore, in hydrogenated thermoplastic elastomers, such as hydrogenated styrene-ethylene-butylene-styrene (SEBS) elastomers, a double bond is partly left in the main chain of each elastomer; hence, the hydrogenated thermoplastic elastomers also undergo oxidative degradation. In contrast, the isobutylene polymer used in the present invention essentially has no double bond in the main chain and thus does not undergo degradation due to the oxidation of the main chain of the isobutylene polymer even at a temperature of 150°C or higher. Hence, there is no degradation in quality. As a result, it is possible to provide final dry resin product pellets having a low remaining solvent content of 1,000 ppm or less and a low remaining monomer content of 1 ppm or less.

After steam stripping, the resulting aqueous solution containing the resin powder is dehydrated and dried in step (3) described below. To recover the resin powder from the aqueous solution containing the resin powder, the dehydration operation may be performed with any one of filters, centrifuges, and the like. The resin powder effectively has, but is not particularly limited to, a water content of 10 to 50 percent by weight after the dehydration operation from the standpoint of energy efficiency of drying or palletizing.

The resulting water-containing resin powder may be processed into resin pellets as a product with an extruder having a volatile materials evaporating system. Examples of the extruder having the volatile materials evaporating system that can be used include single-screw or twin-screw extruders each having a vent system. Particularly, the twin-screw extruders can be suitably used from the standpoint of the efficiency of the removal of the solvent and the monomer. The resin discharged from such an extruder may also be processed into a final product by strand cutting, underwater cutting, hot cutting, or the like.

The isobutylene resin powder of the present invention has low contents of the remaining solvent and the remaining monomer. Thus, the isobutylene resin powder of the present invention is suitably used for applications that are adversely affected by the remaining solvent and the remaining monomer, in particular, for food packaging applications, medical applications, and the like, especially for cap-seal.

### EXAMPLES

The present invention will now be described in more detail by way of examples. However, the present invention is not limited to these examples.

A molecular weight and tensile strength of a block copolymer in each example were measured by the following methods.

The molecular weight was measured with a gel permeation chromatography (GPC) system (manufactured by Waters Corporation; column: Shodex K-804 (polystyrene gel), manufactured by Showa Denko K.K.; mobile phase: chloroform). A number-average molecular weight was expressed in terms of polystyrene.

The value of tensile strength was determined by a tensile test according to JIS K6251 with No. 3 dumbbell-shaped specimens prepared by punching a pressed sheet having a thickness of 2 mm.

The remaining solvent content and remaining monomer content in a resin were determined as the total content of 1-chlorobutane and hexane among the organic compounds remaining in the resin measured by gas chromatography (GC, boiling point column).

Furthermore, when the remaining solvent content and the remaining monomer content were each below 20 ppm, the contents were determined by gas chromatography-mass spectrometry (GC-MS).

### (PRODUCTION EXAMPLE)

Into a 20-L reactor provided with a stirrer, 3.70 kg of 1-chlorobutane dried over molecular sieves, 1.92 kg of hexane dried over molecular sieves, and 2.90 g of p-dicumyl chloride were placed. After the reactor was cooled to -70°C, 2.18 g of N,N-dimethylacetamide and 844 g of isobutylene were added thereto, and then 85 g of titanium tetrachloride was added to initiate polymerization. The reaction was performed for 2 hours at -70°C under stirring. Then, 408 g of styrene was added to the resulting reaction solution. The reaction was continued for another 30 minutes to prepare a polymer solution.

The resulting polymer solution was poured into a large amount of water to terminate the reaction. After the termination of the reaction, a polymer solution phase and an aqueous phase were separated with a separating funnel. The polymer solution phase was washed twice with water in the same way. After verifying that the aqueous phase was neutral, the polymer solution phase was separated to obtain a polymer solution.

From the results of GPC analysis, the number-average molecular weight was determined to be 100,000, and the molecular-weight distribution was determined to be 1.14. Furthermore, the tensile strength was measured to be 18.8 MPa.

### (EXAMPLE 1)

Into a pressure-proof stirring apparatus provided with a 50-L stirred tank and an inner diameter of 30 cm shown in Fig. 1, 12.5 L of deionized water and 12.5 L of the polymer solution prepared in PRODUCTION EXAMPLE were fed, and then 5.1 g of a nonionic surfactant (polyethylene glycol monostearate) was added thereto. The stirred tank was hermetically sealed. The mixture was heated with a jacket under stirring at 400 rpm with a stirrer including 2 stacked impellers, each impeller having a diameter of 15 cm and having 4 angled paddles.

When the internal temperature of the stirred tank reached 90°C, vapor of the solvent was introduced into a condenser attached to the pressure-proof stirring apparatus to successively recover the solvent. The internal pressure was controlled while paying attention to foaming. When the internal pressure decreased to atmospheric pressure and the internal temperature of the stirred tank reached 95°C, heating and the evaporation of the solvent were stopped. When the internal temperature decreases to room temperature, stirring was stopped. The resin slurry formed in the stirred tank was collected. The powder in the collected resin slurry had a particle size of 1 to 2 mm and was thus preferable. The remaining solvent content in the resin was 43,000 ppm. The remaining monomer was only styrene, and the styrene content was 3,000 ppm. The collected resin slurry was returned to the stirred tank. The tank was hermetically sealed, and then steam stripping was performed. A process of injecting steam from the bottom of the stirred tank at 152°C for 60 minutes was employed for steam stripping. Then, the resin slurry was cooled and recovered again. The remaining solvent content in the resin was measured to be 140 ppm. The remaining monomer content in the resin was reduced to as low as 4 ppm.

The resin slurry was spin-dried and pelletized with an extruder having a volatile materials evaporating system to prepare final dry resin product pellets. The remaining monomer content in the pellets was 1 ppm or less. The tensile strength was measured to be as high as 18.3 MPa. Table 1 shows the results.

### (EXAMPLE 2)

A resin slurry was prepared as in EXAMPLE 1 except that the stripping temperature in the step (2) was set at 157°C. The remaining solvent content in the resin slurry was measured to be 94 ppm. The remaining monomer content in the resin slurry was 8 ppm.

The resin slurry was spin-dried and pelletized with an extruder having a volatile materials evaporating system to prepare final dry resin product pellets. The remaining monomer content in the pellets was 1 ppm or less. The tensile strength was measured to be as high as 18.6 MPa. Table 1 also shows the results.

### (COMPARATIVE EXAMPLE 1)

A resin slurry was prepared as in EXAMPLE 1 except that the stripping temperature in the step (2) was set at 145°C. The remaining solvent content in the resin slurry was measured to be 380 ppm. The remaining monomer content was 66 ppm.

The resin slurry was spin-dried and pelletized with an extruder having a volatile materials evaporating system to prepare final dry resin product pellets. The remaining monomer content in the pellets was 8 ppm. The tensile strength was measured to be 18.3 MPa. Table 1 also shows the results.

**Table 1**

| | Stripping temperature (°C) | Dehydrated resin | | Final dry resin product pellet | Tensile strength (MPa) |
|---|---|---|---|---|---|
| | | Residual solvent content (ppm) | Residual monomer content (ppm) | Residual monomer content (ppm) | |
| EXAMPLE 1 | 152 | 140 | 4 | < 1 | 18.4 |
| EXAMPLE 2 | 157 | 94 | 8 | < 1 | 18.6 |
| COMPARATIVE EXAMPLE 1 | 145 | 380 | 66 | 8 | 18.3 |

## Claims

1. A method for producing an isobutylene resin powder from a solution containing an isobutylene polymer, comprising the steps of:
(1) adding a surfactant and water to the solution and removing a solvent by heating while stirring the mixture to cause liquid-liquid dispersion; and then
(2) removing a remaining solvent and a remaining monomer by steam stripping to form a resin powder, wherein the steam stripping is performed at a temperature ranging from 150°C to less than 180°C.

2. The method for producing the isobutylene resin powder according to claim 1, wherein the surfactant used in the step (1) is a nonionic surfactant having a cloud point equal to or higher than the azeotropic point of a mixture of the solvent and water.

3. The method for producing the isobutylene resin powder according to claim 1 or 2, wherein the temperature at which the solvent is removed in the step (1) is from 70°C to less than 130°C.

4. The method for producing the isobutylene resin powder according to any one of claims 1 to 3, further comprising a step of:
(3) separating the resin powder by filtration, centrifugation, or sedimentation from an aqueous resin-powder-containing solution produced in the step (2) and then drying the resulting resin powder, wherein the resin powder is dried with an extruder having a volatile materials evaporating system into pellets.

5. The method for producing the isobutylene resin powder according to any one of claims 1 to 4, wherein the isobutylene polymer is a block copolymer including:
(A) a polymer block mainly containing an isobutylene unit; and
(B) a polymer block mainly containing an aromatic vinyl monomer unit.

6. The method for producing the isobutylene resin powder according to any one of claims 1 to 5, wherein the solvent of the solution containing the isobutylene polymer is a mixed solvent of a primary monohalogenated hydrocarbon having 3 to 8 carbon atoms and/or a secondary monohalogenated hydrocarbon having 3 to 8 carbon atoms and an aliphatic hydrocarbon and/or an aromatic hydrocarbon.
